# EUROPÄISCHE PATENTSCHRIFT

(11) **EP 0 867 215 B1**
(45) Veröffentlichungstag und Bekanntmachung des Hinweises auf die Patenterteilung: **20.03.2002**
(21) Anmeldenummer: 97122021.5
(22) Anmeldetag: 13.12.1997
(51) Int. Cl.: B01D 29/11, B01D 27/06, B01D 46/24

(54) **Rohrförmiges Faltenfilterelement**
Tube-shaped pleated filter element
Elément filtrant plissé en forme de tuyau

(30) Priorität: 27.03.1997 DE 19713025
(43) Veröffentlichungstag der Anmeldung: 30.09.1998
(73) Patentinhaber: Carl Freudenberg KG, 69469 Weinheim (DE)
(72) Erfinder: Hofmann, Margit, 69517 Gorxheimertal (DE); Unrath, Dieter, 69469 Weinheim (DE)

(56) Entgegenhaltungen:
- WO-A-90/11116
- DE-A- 2 102 510
- DE-A- 4 322 226
- US-A- 5 605 555

## Beschreibung

### Technisches Gebiet

Rohrförmige Faltenfilterelemente werden u.a. zur Entstaubung von Gas verwendet. Derartige Filter trennen einen Reingasbereich von einem Rohgasbereich. Hierzu werden sie auf einem Träger montiert, mit dem sie dicht verbunden sein müssen.

### Stand der Technik

Aus der DE-C 34 39 194 ist ein rohrförmiges Faltenfilterelement mit an seinen Enden um das Filterelement herum ringförmig angebrachten, elastischen, einen Kegelstumpf bildenden Endscheiben, die aus einer Kunststoff-Vergußmasse bestehen bekannt. Die durch den Kegelstumpf gebildete Anlagefläche erstreckt sich bis hin zu dem Filterelement.

Weiterhin ist aus der DE-A 44 41 608 bekannt, die Stirnseiten des Filterelements mit einer elastischen Masse abzudichten. Dies hat den Nachteil, daß für die elastische Masse eine Form notwendig ist, in welche das Filterelement eingetaucht wird und bis zum Aushärten verbleibt. Aus der WO-A-95/11071 ist ein Endstück bekannt, welches aus wirr abgelegten und in Kunstharz eingebetteten Fasern besteht. Hierbei wird ein Ende des Filters gasdicht verschlossen.

Die Dokumente WO-A 90/11116 und DE-A 43 22 226 beschreiben rohrförmige Faltenfilterelemente mit an einem Ende des Filterkörpers ringförmig außen und innen umgreifenden, ein U-förmiges Profil ausweisenden Endstück aus einem elastischen Dichtmaterial, bei dem auf der Außenseite des Endstücks eine sich von der Stirnseite weg erstreckend eine Einschnürung vorgesehen ist, der ein gerader Bereich folgt.

Die Aufgabe der Erfindung besteht darin, die Endstücke eines Faltenfilterelements so auszubilden, daß die Herstellung kostengünstig möglich ist und weiterhin soll eine Möglichkeit der Befestigung des Faltenfilterelements an der Trägerstruktur geschaffen werden, die zugleich auch die Abdichtung übernimmt und eine Reduktion der verwendeten Vergußmasse gestattet.

### Darstellung der Erfindung

Erfindungsgemäß weist das Faltenfilterelement auf der Außenseite des Endstücks sich von der Stirnseite weg erstreckend eine Einschnürung auf, welcher ein gerader oder kegelstumpfförmiger Bereich folgt, der im Bereich des Übergangs zur Stirnfläche des Endstücks zu einem Wulst ausgeformt ist und bei dem das Endstück im Bereich des Dichtwulstes auf der Innenseite eine Hinterschneidung aufweist, die von einer in das Endstück eingefüllten Vergußmasse ausgefüllt ist.

Ein Verfahren zur Herstellung eines rohrförmigen Faltenfilterelements, bei dem ein rohrförmiger Filterkörper endseitig in eine Vergußmasse eingebettet und mit einem Endstück von U-förmigem Profil versehen wird, besteht darin, daß die Vergußmasse in flüssigem Zustand in eine parallel zu der Filterachse geöffnete, U-förmige Nut eingefüllt wird und anschließend der Filterkörper in die Nut eingeführt und in die Vergußmasse ein Stück weit eingetaucht wird und dort zur Herstellung einer festen Verbindung verbleibt.

### Kurzbeschreibung der Zeichnung

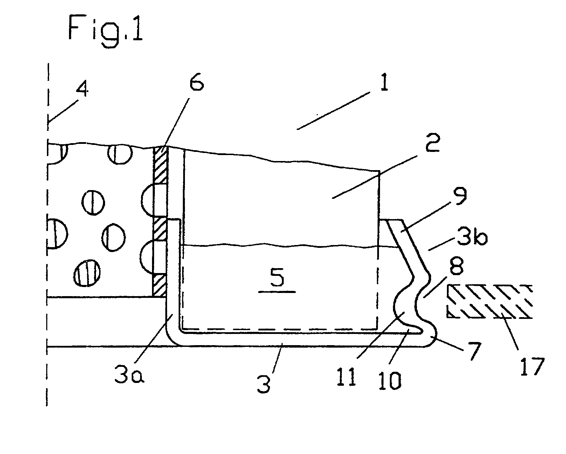

Ein Endstück eines Faltenfilterelements ist in der Zeichnung dargestellt. Es zeigt die Fig. 1 ein Endstück mit Dichtfunktion

### Ausführungsbeispiel der Erfindung

In Fig. 1 ist der Endbereich eines Faltenfilterelementes 1 dargestellt. Der Filterkörper 2 taucht ein Stück weit in ein U-förmiges Endstück 3, dessen Schenkel 3a, 3b, längs einer Mittelachse 4 des Filterkörpers 2 erstrecken.

Zwischen den Schenkeln 3a, 3b des Endstücks 3 ist eine Vergußmasse, z.B. ein aushärtbares Kunstharz 5 in flüssigem Zustand eingefüllt worden und anschließend wurde der Filterkörper 2 in das Kunstharz 5 ein Stück weit eingetaucht. Nach dem Aushärten des Kunstharzes 5 ist eine dichtende Verbindung zwischen dem Filterkörper 2 und dem Endstück 3 hergestellt.

Der Schenkel 3a ist im wesentlichen zylindrisch zur Mittelachse 4, so daß ein zylindrischer Stützkörper 6 in den durch den Faltenkörper 2 umschlossenen Hohlraum eingeschoben werden kann. Dabei ist zwischen dem Schenkel 3a und dem Stützkörper 6 über eine Flächenpressung eine reibschlüssige Verbindung hergestellt.

Auch der Schenkel 3b erstreckt sich im wesentlichen längs der Mittelachse 4. Im Bereich zur Stirnseite des Endstücks 3 weist er einen Dichtwulst 7, gefolgt von einer Einschnürung 8 und einem kegelstumpfförmig zur Mittelachse hin zulaufenden Abschnitt 9 auf. Auf der Innenseite des Schenkels 3b wird im Bereich des Wulsts 7 durch die Einschnürung 8 eine Hinterschneidung 10 erzeugt. Diese Hinterschneidung 10 wird durch eine Materialanhäufung 11 im Bereich der Einschnürung 8 verstärkt und zusätzlich wird im Bereich der Einschnürung 8 eine erhöhte Verformbarkeit des Endstücks geschaffen. Dadurch kann eine Trägerstruktur 17 in die Einschnürung 8 und die Materialanhäufung 11 einschnappen und dort sicher abgedichtet werden. Dazu trägt insbesondere der Formschluß im Bereich der Einschnürung 8 und die höhere Verformbarkeit bei.

Als Trägerstruktur kommt eine Lochplatte 17 in Frage, welche in nicht dargestelltem montierten Zustand des Faltenfilterelements 1 in die Einschnürung 8 eingreift. Durch die seitlichen Begrenzungen der Einschnürung 8 wird eine Art Einrastung des Faltenfilterflächenelements in der Lochplatte 17 bewirkt und eine formschlüssige, aber lösbare Verbindung hergestellt. Da eine Demontage des Faltenfilterelements 1 zur Rohgasseite hin erwünscht ist, das ist die Seite, auf welcher der Filterkörper 2 angeordnet ist, dürfen die Hinterschneidung 10 und der Wulst 7 in ihrer radialen Erstreckung nicht wesentlich über die seitliche Begrenzung der Einschnürung 8 zum Abschnitt 9 hin hinausgehen.

Die Montage des Faltenfilterelements 1 erfolgt von der Reingas- oder von der Rohgaseite durch Einstecken in ein Loch der Lochplatte 17. Hierbei erleichtert der kegelstumpfförmige Abschnitt 9 das Verschieben des Faltenfilterelements 1 im Bereich des Endstücks 3. Während des Verschiebens wird das Endstück 3 besonders im Bereich der Begrenzung der Einschnürung 8 elastisch verformt, bevor das Faltenfilterelement mit der Einschnürung 8 in die Lochplatte 17 einrastet.

Trotz der erforderlichen Verformbarkeit des Endstück 3 zur Herstellung einer mechanischen Verankerung hat sich gezeigt, daß eine mittlere Wandstärke von 3 bis 8 mm besonders vorteilhaft ist. Ist die Wandstärke zu dick, so kann die erforderliche Dichtkraft des verformten Material nicht aufgebracht werden. Ist die Wandstärke zu dünn, so können die beim Einschieben des Faltenfilterelements 1 in die Lochplatte 17 auftretenden Scherkräfte zu einer Beschädigung oder Zerstörung des Endstücks 3 führen. Eine Abdichtung ist dann nicht mehr gewährleistet.

Die Vergußmasse 5 innerhalb des Endstücks 3 kann gegebenenfalls zusätzlich eine eigene, wesentliche Elastizität aufweisen, um die mechanische Verankerung des Faltenfilterelements 1 in der Lochplatte 17 zu verändern. In der Regel ist aber die Verformbarkeit des Endstücks 3 ausreichend, um ein sicheres Einrasten zu ermöglichen.

Der weitere kegelstumpfförmige Verlauf des Schenkels 3b in dem Bereich 9 erlaubt ein Einfügen des Faltenfilterelements in eine bestehende Öffnung.

Dabei ist festzuhalten, daß das Endstück 3 aus elastischem Dichtmaterial besteht, beispielsweise aus geschäumtem Weichkunststoff, wie PU-Schaum, wodurch die zur Abdichtung notwendige Dichtkraft durch elastische Verformung des Dichtmaterials aufgebracht werden kann.

Eine weitere, kostengünstige Herstellung ist durch thermoplastische Verformung eines geschlossenzellig geschäumten Kunststoffmaterials möglich, wie beispielsweise eines vemetzten Polyolefinschaums. Insbesondere läßt sich ein Endstück durch Tiefziehen nach vorausgegangener Erwärmung herstellen. Bei anderen Materialien ist eine Herstellung durch Spritzformen oder Spritzgießen denkbar. Dabei ist es zugleich möglich, die Innenfläche des elastischen Endstücks 3 mit einer Oberflächenstrukturierung zu versehen, um die verfügbare Haftfläche zu vergrößern.

Der Schenkel 3b ist zu dem Filterkörper 2 radial beabstandet ,wobei im Bereich der Materialanhäufung 11 auch eine Berührung stattfinden kann. Dies würde eine zusätzliche Führung bzw. Zentrierung des Filterkörpers 2 im Endstück 3 zur Folge haben. Im wesentlichen wird aber der Filterkörper 2 über den Schenkel 3a zentriert, wobei ein ausreichender Montagespalt vorgesehen werden kann.

Der Vorteil des in Fig. 1 dargestellten Endstücks besteht darin, daß gegenüber bislang verwendeten Endstücken aus erstarrter Vergußmasse weniger Vergußmasse benötigt wird und daß das Erstarren bzw. Aushärten der Vergußmasse in dem Endstück selbst erfolgen kann und nicht mehr in der Gußform erfolgt. Dadurch entfallen die Gußformen, was zu einer kostengünstigeren Herstellung führt.

## Patentansprüche

1. Rohrförmiges Faltenfilterelement (1) mit an einem Ende einen Filterkörper (2) ringförmig außen und innen umgreifendem, ein U-förmiges Profil aufweisenden Endstück (3) aus elastischem Dichtmaterial, **dadurch gekennzeichnet, daß** auf der Außenseite des Endstücks (3) sich von der Stirnseite weg erstreckend eine Einschnürung (8) angeordnet ist, welcher ein gerader oder kegelstumpfförmiger Bereich (9) folgt, daß im Bereich des Übergangs zur Stirnfläche des Endstücks ein Wulst (7) ausgeformt ist und daß das Endstück (3) im Bereich des Dichtwulstes (7) auf der Innenseite eine Hinterschneidung (10) aufweist, die von einer in das Endstück (3) eingefüllten Vergußmasse (5) ausgefüllt ist.

2. Faltenfilterelement nach Anspruch 1, **dadurch gekennzeichnet, daß** die im Bereich der Einschnürung (8) gegenüber dem umliegenden Bereich eine Materialanhäufung (11) vorliegt.

3. Faltenfilterelement nach einem der Ansprüche 1 oder 2, **dadurch gekennzeichnet, daß** der gerade oder kegelstumpfförmige Abschnitt (9) zu dem Filterkörper (2) radial beabstandet ist.

4. Faltenfilterelement nach einem der Ansprüche 1 bis 3, **dadurch gekennzeichnet, daß** das Endstück (3) aus geschäumtem Weichkunststoff besteht.

5. Faltenfilterelement nach Anspruch 4, **dadurch gekennzeichnet, daß** das Endstück (3) aus geschlossenzellig geschäumtem, vernetztem Polyolefin besteht.

## Claims

1. A tubular accordion filter element (1) comprising a filter body (2) annularly embraced exteriorly and interiorly by a U-shaped end piece (3) at one end thereof, said end piece (3) being of resilient sealing material, **characterized in that** the outer surface of said end piece (3) has disposed on it, extending away from the end face, a necking (8) which is followed by a straight or frustoconical region (9), **in that** a bulge (7) is formed in the region of the transition to said end face of said end piece and **in that** said end piece (3) has an undercut (10) on the inner surface in the region of said sealing bulge (7), said undercut (10) being filled by an encapsulating compound (5) introduced into said end piece (3).

2. An accordion filter element according to claim 1, **characterized in that** a material accumulation (11) is present in the region of said necking (8) compared with the surrounding region.

3. An accordion filter element according to either of claims 1 and 2, **characterized in that** said straight or frustoconical section (9) is radially spaced apart from said filter body (2).

4. An accordion filter element according to any one of claims 1 to 3, **characterized in that** said end piece (3) is composed of foamed flexible plastic.

5. An accordion filter element according to claim 4, **characterized in that** said end piece (3) is composed of closed-cellularly foamed, crosslinked polyolefin.

## Revendications

1. Elément filtrant plissé en forme de tuyau (1) avec un tronçon d'extrémité (3) en matière d'étanchéité élastique, présentant un profil en forme de U enveloppant à une extrémité un corps de filtre (2) de façon annulaire à l'extérieur et à l'intérieur, **caractérisé en ce que** sur le côté externe du tronçon d'extrémité (3) est disposé un étranglement (8) s'étendant à distance de la face frontale, auquel fait suite une zone droite ou de forme tronconique (9), **en ce que** dans la zone de transition vers la surface frontale du tronçon d'extrémité est formé un renflement (7) et **en ce que** le tronçon d'extrémité (3) présente dans la zone du renflement d'étanchéité (7), sur le côté interne, une contre-dépouille (10) qui est remplie d'une masse de scellement (5) versée dans le tronçon d'extrémité (3).

2. Elément filtrant plissé selon la revendication 1, **caractérisé en ce que** par rapport à la zone environnante un amoncellement de matière (11) se présente dans la zone de l'étranglement (8).

3. Elément filtrant plissé selon l'une des revendications 1 ou 2, **caractérisé en ce que** la section droite ou tronconique (9) est espacée radialement par rapport au corps de filtre (2).

4. Elément filtrant plissé selon l'une des revendications 1 à 3, **caractérisé en ce que** le tronçon d'extrémité (3) est composé de matière synthétique molle moussée.

5. Elément filtrant plissé selon la revendication 8, **caractérisé en ce que** le tronçon d'extrémité (3) est composé de polyoléfine réticulée, moussée à alvéoles fermées.
